# EUROPÄISCHE PATENTSCHRIFT

(11) **EP 3 578 426 B1**
(45) Veröffentlichungstag und Bekanntmachung des Hinweises auf die Patenterteilung: **29.03.2023**
(21) Anmeldenummer: 19000248.5
(22) Anmeldetag: 20.05.2019
(51) Int. Cl.: B60R 25/25

(54) **VERFAHREN ZUR IDENTIFIKATION EINER PERSON ZUR ANWENDUNG BEI EINEM KRAFTFAHRZEUG**
METHOD FOR IDENTIFYING A PERSON FOR USE IN A MOTOR VEHICLE
PROCÉDÉ D'IDENTIFICATION D'UNE PERSONNE DESTINÉ À L'APPLICATION DANS UN VÉHICULE AUTOMOBILE

(30) Priorität: 06.06.2018 DE 102018004465
(43) Veröffentlichungstag der Anmeldung: 11.12.2019
(73) Patentinhaber: Huf Hülsbeck & Fürst GmbH & Co. KG, 42551 Velbert (DE)
(72) Erfinder: MÖNIG, Stefan, 58332 Schwelm (DE)
(74) Vertreter: Patentanwaltskanzlei Methling

(56) Entgegenhaltungen:
- EP-A1- 3 299 228
- WO-A1-2008/091660
- WO-A1-2017/127053
- US-A1- 2010 148 923
- US-A1- 2015 116 078
- US-A1- 2017 282 856

## Beschreibung

Die Erfindung betrifft ein Verfahren zur Identifikation einer einen Identifikationsgeber führenden Person zur Anwendung bei einem Kraftfahrzeug, wobei das Kraftfahrzeug zumindest eine Steuereinrichtung aufweist, wobei der Identifikationsgeber zumindest einen Bewegungssensor, insbesondere einen Beschleunigungssensor und/oder einen Lagesensor, zumindest eine Batterie und zumindest eine Sendeeinrichtung aufweist.

Derartige Verfahren sind bekannt. Um eine erfolgreiche Identifikation durchzuführen, wird üblicherweise ein Code zwischen dem Identifikationsgeber und einer Steuereinrichtung des Kraftfahrzeugs ausgetauscht. Dieser Austausch entscheidet dann über eine erfolgreiche Identifikation des Identifikationsgebers. Nachteilig dabei ist es, dass eine erfolgreiche Identifikation unabhängig von der den Identifikationsgeber führenden Person erfolgen kann. Auf diese Weise ist ein Missbrauch des Identifikationsgebers möglich, wenn eine unberechtigte Person den Identifikationsgeber findet oder entwendet und somit in das Kraftfahrzeug gelangen und im schlimmsten Fall das Kraftfahrzeug entwenden kann.

Die Aufgabe der Erfindung ist es, ein Verfahren anzugeben, bei dem die Identifikation abhängig von der den Identifikationsgeber führenden Person ermöglicht wird.

Diese Aufgabe wird erfindungsgemäß durch ein Verfahren gemäß Anspruch 1 gelöst. Vorteilhafte Weiterbildungen der Erfindung sind in den Unteransprüchen angegeben.

Besonders vorteilhaft bei dem Verfahren zur Identifikation einer einen Identifikationsgeber führenden Person zur Anwendung bei einem Kraftfahrzeug, wobei das Kraftfahrzeug zumindest eine Steuereinrichtung aufweist, wobei der Identifikationsgeber zumindest einen Bewegungssensor, insbesondere einen Beschleunigungssensor und/oder einen Lagesensor, zumindest eine Batterie und zumindest eine Sendeeinrichtung aufweist, ist es, dass es zumindest folgende Schritte umfasst:
- Messung von Bewegungsdaten der den Identifikationsgeber führenden Person mittels des Bewegungssensors;
- Erfassung der Bewegungsdaten mittels zumindest einer Speichereinheit;
- Verarbeitung der Bewegungsdaten zu einem charakteristischen Bewegungsmuster umfassend mehrere Datenpunkte mittels zumindest einer Recheneinheit;
- Vergleich des verarbeiteten Bewegungsmusters mit zumindest einem bekannten hinterlegten Bewegungsmuster umfassend mehrere Datenpunkte mittels zumindest einer Vergleichseinheit;
   wobei der Vergleich mittels eines Vergleichsalgorithmus erfolgt, umfassend eine Subtraktion der einzelnen Datenpunkte, wobei die einzelnen Subtraktionsergebnisse normiert und addiert werden, sodass abschließend ein Wert S von 0 bis 1 entsteht und mittels der Steuereinrichtung eine Grenzwertüberprüfung erfolgt, wobei der Grenzwert in der Steuereinrichtung vorgebbar und einstellbar ist,
- wobei aufgrund des Vergleichs die den Identifikationsgeber führende Person als berechtigt oder unberechtigt identifiziert wird.

Grundsätzlich hat jede Person beim Gehen eine individuelle Eigenart sich zu bewegen, welche sich in der Beschleunigung und/oder Bewegung in eine jeweilige Raumrichtung, insbesondere in die drei Raumrichtungen und/oder in zeitlicher Abfolge der Bewegungen, widerspiegelt. Eben diese Eigenart, welche somit beim Gehen jeder einzelnen Person charakteristisch und individuell ist, wird unter dem erfindungsgemäßen individuellen Bewegungsmuster verstanden.

Auf diese Weise lässt sich bereits nach wenigen Schritten der Person, die den ID-Geber mitführt, eine Bewegungsdatenmenge mittels des Bewegungssensors messen und mittels der Speichereinheit erfassen. Diese Bewegungsdatenmenge ist wiederum geeignet, ein für die Person eindeutiges und charakteristisches Bewegungsmuster zu ermitteln.

Die Speichereinheit kann dabei in dem ID-Geber angeordnet werden. Alternativ oder kumulativ kann die Speichereinheit in dem Kraftfahrzeug, insbesondere in der Steuereinrichtung angeordnet werden. Im Falle der Anordnung der Speichereinheit in dem Kraftfahrzeug können die mittels des Bewegungssensors gemessenen Bewegungsdaten mittels der Sendeeinrichtung des ID-Gebers an die Speichereinheit gesandt werden, insbesondere mittels einer HF-Verbindung und/oder LF-Verbindung und/oder Bluetooth-Verbindung und/oder Infrarot-Verbindung und/oder WLAN-Verbindung.

Die erfasste Datenmenge wird dann mittels der Recheneinheit zu einem charakteristischen Bewegungsmuster verarbeitet, welches sodann mit zumindest einem bekannten und zuvor hinterlegten Bewegungsmuster mittels der Vergleichseinheit verglichen wird. Die Recheneinheit kann dabei in dem ID-Geber angeordnet werden. Alternativ oder kumulativ kann die Recheneinheit in dem Kraftfahrzeug, insbesondere in der Steuereinrichtung angeordnet werden. Die Vergleichseinheit kann dabei in dem ID-Geber angeordnet werden. Alternativ oder kumulativ kann die Vergleichseinheit in dem Kraftfahrzeug, insbesondere in der Steuereinrichtung angeordnet werden. Die Recheneinheit und die Vergleichseinheit können dabei als eine Einheit ausgebildet werden. Dabei kann es sich insgesamt oder jeweils beispielsweise um einen Mikrokontroller und/oder CPU handeln.

Das bekannte hinterlegte Bewegungsmuster kann dabei in der Speichereinheit oder in einer weiteren Speichereinheit hinterlegt sein. Insbesondere kann das bekannte Bewegungsmuster aus mehreren Messungsdurchgängen gewonnen sein, insbesondere mittels einer Mittelwertbildung zwischen den mehreren Durchgängen. Insbesondere kann das bekannte Bewegungsmuster nachträglich beispielsweise nach einer Eingabe einer PIN verändert und/oder ersetzt werden. Die Hinterlegung eines bekannten Bewegungsmusters kann dabei durch insbesondere drei, fünf, zehn oder mehr Schritte der Person erfolgen. Ferner können dabei mehrere bekannte Bewegungsmuster hinterlegt werden. Das verarbeitete Bewegungsmuster kann somit mit mehreren bekannten hinterlegten Bewegungsmustern verglichen werden. Bei der Vergleichseinheit kann es sich um die Recheneinheit oder eine zusätzliche Einheit handeln.

Das Vergleichsergebnis kann positiv oder negativ ausfallen. Das Vergleichsergebnis kann dabei als Grundlage für das weitere Verfahren insbesondere im Hinblick auf die Sicherheit und/oder den Komfort des Kraftfahrzeugs dienen. Bei einem positiven Vergleichsergebnis, insbesondere bei einer maßgeblichen Übereinstimmung und/oder bei vernachlässigbaren Unterschieden, kann anschließend die den ID-Geber führende Person als bekannt und/oder berechtigt erkannt werden. Eine maßgebliche Übereinstimmung kann bei einer Übereinstimmung des charakteristischen Bewegungsmusters mit dem bekannten hinterlegten Bewegungsmuster von mindestens 30% bis 100%, insbesondere von mindestens 50%, 60%, 70%, 80%, 90% oder 95% festgestellt werden. Bei einem negativen Vergleichsergebnis wird die Person hingegen als unbekannt und/oder unberechtigt erkannt.

Kern der Erfindung ist somit die Identifikation der den Identifikationsgeber führenden Person aufgrund von aktuellen individuellen und/oder charakteristischen Bewegungsdaten. Das Verfahren wird somit nicht auf einen Vergleich eines nicht individualisierten Codes zwischen dem ID-Geber und der Steuereinrichtung des Kraftfahrzeugs beschränkt. Vielmehr wird es durch einen Abgleich von für jede Person individuellen Daten erweitert. Vorteilhaft dabei ist, dass in dem Fall, dass der ID-Geber in den Herrschaftsbereich einer unbekannten Person gelangt ist, diese Person mittels des Verfahrens eben als unbekannt und/oder unberechtigt erkannt werden kann. Ferner ermöglicht das Verfahren die Erkennung einer bestimmten Person, sodass individuelle Kraftfahrzeugeinstellungen der bestimmten Person voreinstellbar sind.

Vorzugsweise ist das bekannte hinterlegte Bewegungsmuster in der Speichereinheit hinterlegt, welche in dem Identifikationsgeber und/oder in dem Kraftfahrzeug angeordnet ist. Alternativ oder kumulativ kann das bekannte hinterlegte Bewegungsmuster in einer weiteren Speichereinheit des Identifikationsgebers und/oder des Kraftfahrzeugs, insbesondere der Steuereinheit, hinterlegt sein.

Im Falle einer Hinterlegung des bekannten hinterlegten Bewegungsmusters in der Speichereinheit und/oder der weiteren Speichereinheit des Identifikationsgebers kann der Vergleich ohne Sendung der Daten an das Kraftfahrzeug erfolgen, sodass ein schnellerer Vergleich ermöglicht wird. Bei einer Hinterlegung des bekannten hinterlegten Bewegungsmusters in der Speichereinheit und/oder der weiteren Speichereinheit des Kraftfahrzeugs kann das bekannte Bewegungsmuster auch bei einem Verlust des ID-Gebers erhalten werden. Ferner kann hierdurch das Risiko eines Missbrauchs minimiert werden, da ein entwendeter Schlüssel beispielsweise durch den Ersatz der Speichereinheit manipuliert werden kann.

Bevorzugt erfolgt der Vergleich mittels eines Algorithmus. Insbesondere kann ein Vergleichsergebnis von einer Grenzwertüberprüfung abhängen. Eine solche Grenzwertüberprüfung erlaubt ein positives Vergleichsergebnis auch bei einer nicht vollständigen Übereinstimmung des verarbeiteten Bewegungsmusters mit dem bekannten hinterlegten Bewegungsmuster, was in der Praxis die Regel sein wird. Der Grenzwert kann dabei statistisch definiert werden, insbesondere bei 30% bis 100%, insbesondere 50%, 60%, 70%, 80%, 90% oder 95% der Übereinstimmung liegen.

Vorzugsweise wird aufgrund des Vergleichs die den Identifikationsgeber führende Person als berechtigt oder unberechtigt identifiziert.

Bevorzugt wird aufgrund des Vergleichs die den Identifikationsgeber führende Person als berechtigt oder unberechtigt identifiziert, wobei eine als berechtigt identifizierte Person zu einem Zugang des Kraftfahrzeugs berechtigt wird. insbesondere kann der Zugang dabei durch eine Entriegelung eines Kraftfahrzeugtürschlosses und/oder eine aktive Öffnung einer Kraftfahrzeugtür mittels der Steuereinrichtung aktiviert werden. Bei einer als unberechtigt identifizierten Person wird der Zugang hingegen deaktiviert.

Vorzugsweise wird aufgrund des Vergleichs die den Identifikationsgeber führende Person als berechtigt oder unberechtigt identifiziert, wobei eine als berechtigt identifizierte Person zu einem Motorstart des Kraftfahrzeugs berechtigt wird. Bei einer als unberechtigt identifizierten Person wird der Motorstart hingegen deaktiviert. Dadurch wird das Risiko der Fahrzeugentwendung weiter minimiert. Bei dem Motor kann es sich insbesondere um einen Verbrennungsmotor und/oder einen Elektromotor und/oder einen Hybridantrieb handeln.

Vorzugsweise wird aufgrund des Vergleichs die den Identifikationsgeber führende Person als berechtigt oder unberechtigt identifiziert, wobei eine Identifikation der den Identifikationsgeber führenden Person als unberechtigt mittels des Identifikationsgebers und/oder der Steuereinrichtung erfasst wird. Dies kann durch die Speichereinheit erfolgen und/oder zum späteren Zeitpunkt ausgelesen werden. Die Erfassung kann dabei den Zeitpunkt und/oder bei Vorhandensein eines GPS-Sensors in dem ID-Geber und/oder in dem Kraftfahrzeug den Ort umfassen. Insbesondere kann dabei eine Alarmanlage des Kraftfahrzeugs und/oder ein Polizeiruf mittels der Steuereinrichtung aktiviert werden.

Bevorzugt wird aufgrund des Vergleichs die den Identifikationsgeber führende Person als berechtigt oder unberechtigt identifiziert, wobei die Steuereinrichtung des Kraftfahrzeugs bei einer Identifikation einer bestimmten als berechtigt identifizierten Person eine der bestimmten Person zugewiesene Sitzeinstellung und/oder Spiegeleinstellung und/oder Temperatureinstellung und/oder Fahrmoduseinstellung aktiviert. Die genannten Kraftfahrzeugeinstellungen sind jedoch nicht abschließend. Es können weitere Einstellungen, insbesondere Navigationseinstellungen und/oder Beleuchtungseinstellungen und/oder Multimediaeinstellungen auf diese Weise aktiviert werden. Dies kann insbesondere dann erfolgen, wenn mehrere bekannte hinterlegte Bewegungsmuster vorhanden sind. Jedes bekannte hinterlegte Bewegungsmuster ist dabei individuell für die jeweilige bestimmte Person. Dieser bestimmten Person und dem entsprechenden bekannten hinterlegten Bewegungsmuster können somit etwaige Kraftfahrzeugeinstellungen, insbesondere Sitzeinstellung und/oder Spiegeleinstellung und/oder Temperatureinstellung und/oder Fahrmoduseinstellung zugewiesen werden, welche insbesondere in der Speichereinheit abgespeichert werden können. Bei einer Identifikation dieser bestimmten Person können die Kraftfahrzeugeinstellungen übernommen werden, sodass ein hoher Komfort des Kraftfahrzeugs ermöglicht wird.

Vorzugsweise erfolgt ferner ein Vergleich eines bekannten Fingerabdrucks mit einem mittels eines Fingerabdruckscanners ermittelten Fingerabdruck der den Identifikationsgeber führenden Person. Der Fingerabdruckscanner kann dabei in/an dem Identifikationsgeber und/oder in/an dem Kraftfahrzeug angeordnet sein. Der bekannte Fingerabdruck kann in der Speichereinheit hinterlegt werden. Das Sicherheitsniveau wird dadurch weiter erhöht.

Bevorzugt erfolgt ferner ein Vergleich eines bekannten Fotos mit einem mittels einer Kamera aufgenommenen Fotos der den Identifikationsgeber führenden Person. Die Kamera kann dabei in/an dem Identifikationsgeber und/oder in/an dem Kraftfahrzeug angeordnet sein. Das bekannte Foto kann in der Speichereinheit hinterlegt werden. Das Sicherheitsniveau wird somit weiter gesteigert.

Vorzugsweise ist das Verfahren mittels einer Betätigung des Identifikationsgebers und/oder einer Betätigung der Steuereinrichtung, insbesondere für einen definierten Zeitraum deaktivierbar. Insbesondere kann die Deaktivierung mittels einer bestimmten Bewegungsabfolge und/oder nach Eingabe einer PIN erfolgen.

Bevorzugt wird als Identifikationsgeber ein Mobiltelefon und/oder eine Armbanduhr verwendet. Dies ist vorteilhaft, da ein Mobiltelefon und/oder eine Armbanduhr in den meisten Fällen einen Bewegungssensor und/oder einen Fingerabdruckscanner und/oder eine Kamera umfasst. Ferner kann hierdurch auf einen zusätzlichen Kraftfahrzeugidentifikationsgeber verzichtet werden, indem ein das erfindungsgemäße Verfahren ausführendes Programm auf dem Mobiltelefon und/oder der Armbanduhr installiert wird.

Ein Ausführungsbeispiel der Erfindung ist in den Figuren dargestellt und wird nachfolgend erläutert. Es zeigen:
- Fig. 1: eine Darstellung eines Bewegungsmusters einer Person A;
- Fig. 2: eine Darstellung eines Bewegungsmusters einer Person B.

Die Elemente sind dabei lediglich schematisch und nicht maßstabsgerecht dargestellt.

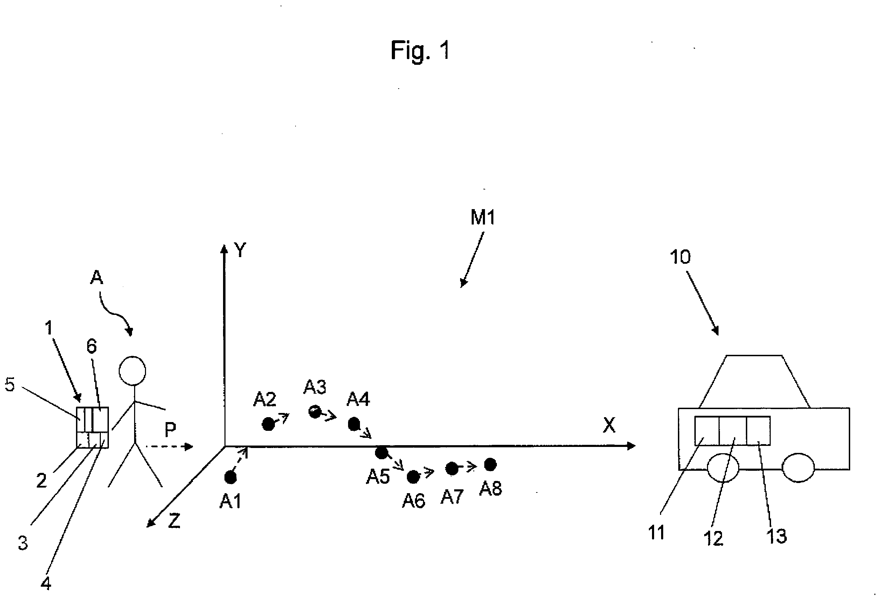

Die Figur 1 zeigt eine Darstellung eines Bewegungsmusters M1 einer Person A. Die Person A führt einen Identifikationsgeber 1 mit sich und bewegt sich in Richtung des Pfeils P zu einem Kraftfahrzeug 10. Der Identifikationsgeber 1 umfasst eine Batterie 2, einen Bewegungssensor 3, eine Speichereinheit 4, eine Recheneinheit 5 in Form eines CPU und eine HF-Sende- und Empfangseinrichtung 6.

Aufgrund der individuellen Eigenart der Person A, sich beim Gehen zu bewegen, werden mittels des in dem Identifikationsgeber 1 angeordneten Bewegungssensors 3 Beschleunigungen und Bewegungen in die drei Raumrichtungen X, Y und Z gemessen und mittels einer Speichereinheit 4 erfasst. Mittels der Recheneinheit 5 werden die Bewegungsdaten zu dem dargestellten Bewegungsmuster M1 verarbeitet. Jeder einzelne Datenpunkt von A1 bis A8 umfasst dabei die drei Raumkoordinaten X, Y, Z, einen Beschleunigungswert sowie einen Beschleunigungsvektor. Die Beschleunigungswerte und die Beschleunigungsvektoren sind mittels an den einzelnen Datenpunkten A1 bis A8 angreifenden gestrichelten Pfeilen dargestellt. Somit wird das für die Person A individuelle Bewegungsmuster M1 ermittelt und verarbeitet.

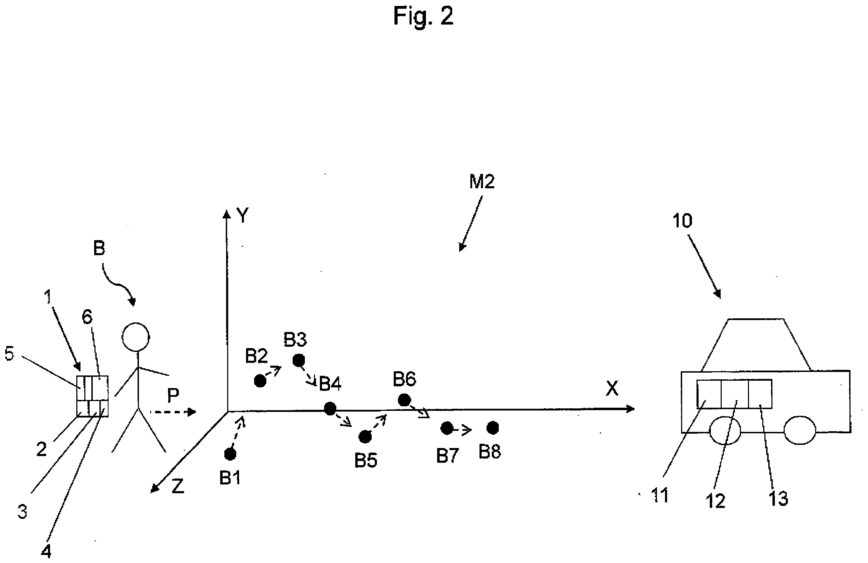

Das Muster M1 wird dann an eine Steuereinrichtung 11 in dem Kraftfahrzeug 10 mittels der HF-Sende- und Empfangseinrichtung 6 gesendet. In einer weiteren Speichereinheit 13 des Kraftfahrzeugs 10 ist ein bekanntes zuvor hinterlegtes Bewegungsmuster M2 hinterlegt, welches nach mehreren Messungsdurchgängen einer bekannten Person B gemäß Figur 2 gewonnen wurde. Das Bewegungsmuster M2 umfasst die Datenpunkte B1 bis B8. Die Beschleunigungswerte und die Beschleunigungsvektoren sind mittels an den einzelnen Datenpunkten B1 bis B8 angreifenden gestrichelten Pfeilen dargestellt.

Mittels einer Vergleichseinheit 12 des Kraftfahrzeugs 10 in Form eines CPU wird das verarbeitete Bewegungsmuster M1 mit dem bekannten hinterlegten Bewegungsmuster M2 verglichen. Dies erfolgt mittels eines Vergleichsalgorithmus. Dieser umfasst eine Subtraktion der einzelnen Datenpunkte B1 - A1, B2 - A2 etc. Die einzelnen Subtraktionsergebnisse werden normiert und addiert, sodass abschließend ein Wert S von 0 bis 1 entsteht.

In der Steuereinrichtung 11 ist eine Grenzwertüberprüfung definiert, sodass bei einem Wert S von kleiner oder gleich 0,5 die Person A ein positives Vergleichsergebnis erhält und somit als berechtigt identifiziert wird. Bei einem Wert S über 0,5 wird die Person hingegen als unberechtigt identifiziert. Der Grenzwert ist in der Steuereinrichtung 11 vorgebbar und einstellbar.

Bei mehreren in der weiteren Speichereinheit 13 hinterlegten bekannten Bewegungsmustern wird das verarbeitete Bewegungsmuster M1 mit mehreren bekannten Bewegungsmustern verglichen.

Dadurch, dass das Verfahren einen Vergleich von individuellen Bewegungsmustern umfasst, kann eine Person, welche zufällig oder missbräuchlich in den Besitz des Identifikationsgebers 1 gekommen ist, als unberechtigt identifiziert werden. Somit können dieser Person beispielsweise der Zugang und/oder der Motorstart des Kraftfahrzeugs 10 verwehrt werden. Das Sicherheitsniveau wird somit erhöht. Ferner können individuelle Kraftfahrzeugeinstellungen, welche einem bestimmten bekannten Bewegungsmuster zugewiesen sind, automatisch von der Steuereinrichtung 11 in dem Kraftfahrzeug 10 bei Erkennung des bestimmten bekannten Bewegungsmusters aktiviert werden. Auf diese Weise wird der Komfort des Kraftfahrzeugs 10 erhöht.

## Patentansprüche

1. Verfahren zur Identifikation einer einen Identifikationsgeber (1) führenden Person zur Anwendung bei einem Kraftfahrzeug (10), wobei das Kraftfahrzeug (10) zumindest eine Steuereinrichtung (11) aufweist, wobei der Identifikationsgeber (1) zumindest einen Bewegungssensor (3), insbesondere einen Beschleunigungssensor und/oder einen Lagesensor, zumindest eine Batterie (2) und zumindest eine Sendeeinrichtung (6) aufweist, umfassend zumindest folgende Schritte:
- Messung von Bewegungsdaten der den Identifikationsgeber (1) führenden Person mittels des Bewegungssensors (3);
- Erfassung der Bewegungsdaten mittels zumindest einer Speichereinheit (4);
- Verarbeitung der Bewegungsdaten zu einem charakteristischen Bewegungsmuster (M1) **umfassend mehrere Datenpunkte (A1-A8)** mittels zumindest einer Recheneinheit (5);
- Vergleich des verarbeiteten Bewegungsmusters mit zumindest einem bekannten hinterlegten Bewegungsmuster (M2) **umfassend mehrere Datenpunkte (B1-B8)** mittels zumindest einer Vergleichseinheit (12);
**wobei der Vergleich mittels eines Vergleichsalgorithmus erfolgt, umfassend eine Subtraktion der einzelnen Datenpunkte (B1-A1 bis B8-B1), wobei die einzelnen Subtraktionsergebnisse normiert und addiert werden, sodass abschließend ein Wert S von 0 bis 1 entsteht und mittels der Steuereinrichtung (11) eine Grenzwertüberprüfung erfolgt, wobei der Grenzwert in der Steuereinrichtung (11) vorgebbar und einstellbar** ist;
- wobei aufgrund des Vergleichs die den Identifikationsgeber (1) führende Person als berechtigt oder unberechtigt identifiziert wird.

2. Verfahren nach Anspruch 1, **dadurch gekennzeichnet, dass** das bekannte hinterlegte Bewegungsmuster (M2) in der Speichereinheit (4) hinterlegt ist, welche in dem Identifikationsgeber und/oder in dem Kraftfahrzeug angeordnet ist, und/oder in einer weiteren Speichereinheit (13) des Identifikationsgebers (1) und/oder des Kraftfahrzeugs (10), insbesondere der Steuereinheit (11), hinterlegt ist.

3. Verfahren nach Anspruch 1 oder 2, **dadurch gekennzeichnet, dass** der Vergleich mittels eines Algorithmus erfolgt, insbesondere dass ein Vergleichsergebnis von einer Grenzwertüberprüfung abhängt.

4. Verfahren nach einem der vorherigen Ansprüche, **dadurch gekennzeichnet, dass** aufgrund des Vergleichs die den Identifikationsgeber (1) führende Person als berechtigt oder unberechtigt identifiziert wird, wobei eine als berechtigt identifizierte Person zu einem Zugang des Kraftfahrzeugs (10) berechtigt wird.

5. Verfahren nach einem der vorherigen Ansprüche, **dadurch gekennzeichnet, dass** aufgrund des Vergleichs die den Identifikationsgeber (1) führende Person als berechtigt oder unberechtigt identifiziert wird, wobei eine als berechtigt identifizierte Person zu einem Motorstart des Kraftfahrzeugs (10) berechtigt wird.

6. Verfahren nach einem der vorherigen Ansprüche, **dadurch gekennzeichnet, dass** aufgrund des Vergleichs die den Identifikationsgeber (1) führende Person als berechtigt oder unberechtigt identifiziert wird, wobei eine Identifikation der den Identifikationsgeber führenden Person als unberechtigt mittels des Identifikationsgebers (1) und/oder der Steuereinrichtung (11) erfasst wird, insbesondere dass eine Alarmanlage des Kraftfahrzeugs (10) mittels der Steuereinrichtung (11) aktiviert wird.

7. Verfahren nach einem der vorherigen Ansprüche, **dadurch gekennzeichnet, dass** aufgrund des Vergleichs die den Identifikationsgeber (1) führende Person als berechtigt oder unberechtigt identifiziert wird, wobei die Steuereinrichtung (11) des Kraftfahrzeugs (10) bei der Identifikation einer bestimmten als berechtigt identifizierten Person eine der bestimmten Person zugewiesene Sitzeinstellung und/oder Spiegeleinstellung und/oder Temperatureinstellung und/oder Fahrmoduseinstellung aktiviert.

8. Verfahren nach einem der vorherigen Ansprüche, **dadurch gekennzeichnet, dass** ferner ein Vergleich eines bekannten Fingerabdrucks mit einem mittels eines Fingerabdruckscanners ermittelten Fingerabdruck der den Identifikationsgeber (1) führenden Person erfolgt.

9. Verfahren nach einem der vorherigen Ansprüche, **dadurch gekennzeichnet, dass** ferner ein Vergleich eines bekannten Fotos mit einem mittels einer Kamera aufgenommenen Fotos der den Identifikationsgeber (1) führenden Person erfolgt.

10. Verfahren nach einem der vorherigen Ansprüche, **dadurch gekennzeichnet, dass** das Verfahren mittels einer Betätigung des Identifikationsgebers (1) und/oder einer Betätigung der Steuereinrichtung (11) deaktivierbar ist.

11. Verfahren nach einem der vorherigen Ansprüche, **dadurch gekennzeichnet, dass** als Identifikationsgeber (1) ein Mobiltelefon verwendet wird.

## Claims

1. Method for identifying a person carrying an identification transmitter (1), for use in a motor vehicle (10), the motor vehicle (10) having at least one control unit (11), the identification transmitter (1) having at least one movement sensor (3), in particular an acceleration sensor and/or a position sensor, at least one battery (2) and at least one transmitting unit (6), comprising at least the following steps:
- measurement by means of the movement sensor (3) of movement data of the person carrying the identification transmitter (1);
- acquisition of the movement data by means of at least one storage unit;
- processing of the movement data into a characteristic movement pattern (M1) comprising several data points (A1-A8), by means of at least one processing unit (5);
- comparison of the processed movement pattern with at least one known stored movement pattern (M2) comprising several data points (B1-B8), by means of at least one comparison unit (12);
wherein the comparison is carried out by means of a comparison algorithm, comprising a subtraction of the individual data points (B1-A1 to B8-B1), wherein the individual subtraction results are standardised and added, so that finally a value S of 0 to 1 is produced and a limit value check is carried out by means of the control unit (11), wherein the limit value can be predetermined and set in the control unit (11);
- wherein, on the basis of the comparison, the person carrying the identification transmitter (1) is identified as authorised or unauthorised.

2. Method according to claim 1, **characterised in that** the known stored movement pattern (M2) is stored in the memory unit (4), which is arranged in the identification transmitter and/or in the motor vehicle, and/or is stored in a further memory unit (13) of the identification transmitter (1) and/or of the motor vehicle (10), in particular the control unit (11).

3. Method according to claim 1 or 2, **characterised in that** the comparison is carried out by means of an algorithm, in particular that a comparison result depends on a limit value check.

4. Method according to any one of the previous claims, **characterised in that**, on the basis of the comparison, the person carrying the identification transmitter (1) is identified as authorised or unauthorised, a person identified as authorised being authorised to access the motor vehicle (10).

5. Method according to any one of the previous claims, **characterised in that**, on the basis of the comparison, the person carrying the identification transmitter (1) is identified as authorised or unauthorised, a person identified as authorised being authorised to start the engine of the motor vehicle (10).

6. Method according to any one of the previous claims, **characterised in that**, on the basis of the comparison, the person carrying the identification transmitter (1) is identified as authorised or unauthorised, identification of the person carrying the identification transmitter as unauthorised being detected by means of the identification transmitter (1) and/or the control unit (11), in particular **in that** an alarm system of the motor vehicle (10) is activated by means of the control unit (11).

7. Method according to any one of the previous claims, **characterised in that**, on the basis of the comparison, the person carrying the identification transmitter (1) is identified as authorised or unauthorised, wherein, upon identification of a particular person identified as authorised, the control unit (11) of the motor vehicle (10) activates a seat setting and/or mirror setting and/or temperature setting and/or driving mode setting assigned to the particular person.

8. Method according to any one of the previous claims, **characterised in that** a comparison is also made between a known fingerprint and a fingerprint of the person carrying the identification transmitter (1) determined by means of a fingerprint scanner.

9. Method according to any one of the previous claims, **characterised in that** a comparison is also made between a known photograph and a photograph, taken by means of a camera, of the person carrying the identification transmitter (1).

10. Method according to any one of the previous claims, **characterised in that** the method can be deactivated by means of an actuation of the identification transmitter (1) and/or an actuation of the control unit (11).

11. Method according to any one of the previous claims, **characterised in that** a mobile telephone is used as the identification transmitter (1).

## Revendications

1. Procédé d'identification d'une personne gérant un générateur d'identification (1) pour l'application dans un véhicule automobile (10), dans lequel le véhicule automobile (10) présente au moins un appareil de commande (11), dans lequel le générateur d'identification (1) présente au moins un capteur de mouvement (3), en particulier un capteur d'accélération et/ou un capteur de position, au moins une batterie (2) et au moins un appareil d'émission (6), comprenant au moins les étapes suivantes :
- la mesure de données de mouvement de la personne gérant le générateur d'identification (1) au moyen du capteur de déplacement (3) ;
- la détection des données de mouvement au moyen d'au moins une unité de mémoire
- le traitement des données de mouvement pour un modèle de mouvement (M1) caractéristique comprenant plusieurs points de données (A1-A8) au moyen d'au moins une unité de calcul (5) ;
- la comparaison du modèle de mouvement traité avec au moins un modèle de déplacement (M2) enregistré connu comprenant plusieurs points de données (B1-B8) au moyen d'au moins une unité de comparaison (12) ;
dans lequel la comparaison est effectuée au moyen d'un algorithme de comparaison, comprenant une soustraction des points de données (B1-A1 à B8-B1) individuels, dans lequel les résultats de soustraction individuels sont normés et ajoutés de sorte qu'enfin une valeur S de 0 à 1 apparaisse et une vérification de valeur limite soit effectuée au moyen de l'appareil de commande (11), dans lequel la valeur limite peut être prédéfinie et réglée dans l'appareil de commande (11) ;
- dans lequel en raison de la comparaison, la personne gérant le générateur d'identification (1) est identifiée comme autorisée ou non autorisée.

2. Procédé selon la revendication 1, **caractérisé en ce que** le modèle de mouvement (M2) enregistré connu est enregistré dans l'unité de mémoire (4) qui est agencée dans le générateur d'identification et/ou dans le véhicule automobile, et/ou dans une autre unité de mémoire (13) du générateur d'identification (1) et/ou du véhicule automobile (10), en particulier du dispositif de commande (11).

3. Procédé selon la revendication 1 ou 2, **caractérisé en ce que** la comparaison est effectuée au moyen d'un algorithme, en particulier qu'un résultat de comparaison dépend d'une vérification de valeur limite.

4. Procédé selon l'une quelconque des revendications précédentes, **caractérisé en ce qu'**en raison de la comparaison, la personne gérant le générateur d'identification (1) est identifiée comme autorisée ou non autorisée, dans lequel une personne identifiée comme autorisée est autorisée à un accès du véhicule automobile (10).

5. Procédé selon l'une quelconque des revendications précédentes, **caractérisé en ce qu'**en raison de la comparaison, la personne gérant le générateur d'identification (1) est identifiée comme autorisée ou non autorisée, dans lequel une personne identifiée comme autorisée est autorisée à un démarrage de moteur du véhicule automobile (10).

6. Procédé selon l'une quelconque des revendications précédentes, **caractérisé en ce qu'**en raison de la comparaison, la personne gérant le générateur d'identification (1) est identifiée comme autorisée ou non autorisée, dans lequel une identification de la personne gérant le générateur d'identification est détectée comme non autorisée au moyen du générateur d'identification (1) et/ou de l'appareil de commande (11), en particulier qu'une installation d'alarme du véhicule automobile (10) est activée au moyen de l'appareil de commande (11).

7. Procédé selon l'une quelconque des revendications précédentes, **caractérisé en ce qu'**en raison de la comparaison, la personne gérant le générateur d'identification (1) est identifiée comme autorisée ou non autorisée, dans lequel l'appareil de commande (11) du véhicule automobile (10) active, lors de l'identification d'une personne déterminée identifiée comme autorisée, un réglage de siège et/ou réglage de miroir et/ou réglage de température et/ou réglage de mode de roulement attribué à la personne déterminée.

8. Procédé selon l'une quelconque des revendications précédentes, **caractérisé en ce que** de plus, une comparaison d'une empreinte digitale connue est effectuée avec une empreinte digitale calculée au moyen d'un scanner d'empreinte digitale de la personne gérant le générateur d'identification (1).

9. Procédé selon l'une quelconque des revendications précédentes, **caractérisé en ce que** de plus, une comparaison d'une photo connue est effectuée avec une photo prise au moyen d'une caméra de la personne gérant le générateur d'identification (1).

10. Procédé selon l'une quelconque des revendications précédentes, **caractérisé en ce que** le procédé peut être désactivé au moyen d'un actionnement du générateur d'identification (1) et/ou d'un actionnement de l'appareil de commande (11).

11. Procédé selon l'une quelconque des revendications précédentes, **caractérisé en ce qu'**un téléphone mobile est utilisé comme générateur d'identification (1).
